# EUROPEAN PATENT SPECIFICATION

(11) **EP 2 791 865 B1**
(45) Date of publication and mention of the grant of the patent: **02.03.2016**
(21) Application number: 11804821.4
(22) Date of filing: 12.12.2011
(51) Int. Cl.: G06K 9/32

(54) **SYSTEM AND METHOD FOR ESTIMATING TARGET SIZE**
SYSTEM UND VERFAHREN ZUR BESTIMMUNG EINER ZIELGRÖSSE
SYSTÈME ET PROCÉDÉ D'ÉVALUATION DES DIMENSIONS D'UNE CIBLE

(43) Date of publication of application: 22.10.2014
(73) Proprietor: Aselsan Elektronik Sanayi ve Ticaret Anonim Sirketi, Ankara (TR)
(72) Inventor: AKAGUNDUZ, Erdem, 06011 Ankara (TR)
(74) Representative: Dericioglu Kurt, Ekin
(86) International application number: PCT/IB2011/055618
(87) International publication number: WO 2013/088199

(56) References cited:
- SUNGHO KIM ET AL: "Robust scale invariant target detection using the scale-space theory and optimization for IRST", PATTERN ANALYSIS AND APPLICATIONS, SPRINGER-VERLAG, LO, vol. 14, no. 1, 21 November 2010 (2010-11-21), pages 57-66, XP019877101, ISSN: 1433-755X, DOI: 10.1007/S10044-010-0190-X
- LUCIAN DR GU ET AL: "Local variance for multi-scale analysis in geomorphometry", GEOMORPHOLOGY, ELSEVIER, AMSTERDAM, NL, vol. 130, no. 3, 21 March 2011 (2011-03-21), pages 162-172, XP028226394, ISSN: 0169-555X, DOI: 10.1016/J.GEOMORPH.2011.03.011 [retrieved on 2011-03-26]
- BOIANGIU ET AL: "Local thresholding image binarization using variable-window standard deviation response", ANNALS OF DAAAM FOR ... & PROCEEDINGS OF THE ... INTERNATIONAL DAAAM SYMPOSIUM, DANUBE ADRIA ASSOCIATION FOR AUTOMATION & MANUFACTURING, VIENNA, AT, vol. 21, no. 1, 1 January 2010 (2010-01-01), pages 133-134, XP008155408, ISSN: 1726-9679
- "Chapter 1: Introduction and overview (passage)" In: Lindeberg T: "Scale-Space Theory in Computer Vision", 1994, Kluwer Academic Press, Boston, US, XP002683298, ISBN: 0-7923-9418-6 pages 8-13, section 1.3.4 - section 1.4.3

## Description

### Field of the Invention

The present invention relates to the field of image processing and methodologies to estimate the target size of an object of known position on an image, especially on infrared imaging systems where there is generally a contrast difference between the target and the background.

### Background of the Invention

It is known that there are systems that use methods and models to estimate the position and size of an object (or equivalently a "target") on a still image or a video frame. Infrared search and track (IRST) systems, in which infrared images of a scene are acquired and converted into grayscale format, are good examples of such systems. The acquired images consist of a two dimensional array of pixel values which represent the infrared intensities at these locations. Currently there are methods to estimate a target's location and size using statistical approaches, for example by calculating the standard deviation of intensity values of the neighboring pixels around a center pixel and by successively decreasing this neighboring area until a target is detected. This statistical approach will require determination of an image histogram which is the distribution of pixels of different intensities. Such an approach may be considered reasonable; however in reality there should be other steps to make sure that the system doesn't get affected from concerns like the possible noise from the sensor, texture of the target or unexpected temperature changes in the case of infrared vision which makes the problem much more complex.

Moreover in some cases, the position of the target is known previously. For this reason, a search for the target is unnecessary and the primary objective is to determine the target size based on its pixel position. In such cases, the position of the target can be given by the user (e.g. by a pointing device) and the method will determine the target size by searching for a target inside different windows (of all possible sizes). This is a very slow process and is dependent to image resolution. In addition, a simple method to determine whether the system is being affected by noise/texture is required, which is usually done by a signal to noise ratio analysis and is also inefficient.

In another method, image gradient values can also be used to detect target position. This method is very susceptible to image noise and the focus of the method is to detect only the target position. In order to detect the target size, a method that calculates pixel value standard deviation in an area around a given target position should be used.

In order to solve the mentioned problems, methods that generate scale-spaces of images (the representation of images with different scales or magnifications) can be used. Scale-space based methods can handle issues caused by texture and/or noise and can detect the target size independent of the image resolution. There are existing methods that use image scale-space in order to determine salient features on a target in an image. However these methods clearly do not aim to estimate the target size and include complex convolution operations which are unnecessary for our purpose.

As a result, for a gray level image that includes a target object of given position, the current methods do not offer a simple and efficient way to estimate the size of a rectangle that encapsulates the whole target with minimum possible number of background pixels.

The United States patent document US20110001823, an application in the state of the art, discloses a method for detecting target location and size, using pixel standard deviation where the target size is sought by varying window size by one pixel at each iteration.

A similar technique is described in Drãgut et al., "Local variance for multi-scale analysis in geomorphometry", Geomorphology 130 (2011), p.162-172.

The present invention may resemble the mentioned methods in the sense that it performs a target search using pixel standard deviation. However, unlike the mentioned methods, the present invention generates a pixel standard deviation scale-space. In other words, while calculating the standard deviation in growing windows, the growing step size is increased and repeated for a number of iterations. Thus, the target size search is carried out in successively increasing step sizes. This allows the present invention to calculate the target size independent of the image resolution, unlike the mentioned method which varies window size by one pixel at each iteration or by a fixed amount.

The United States patent document US7430303**,** an application in the state of the art, discloses a method for detecting a target in images using image gradient values.

The present invention differs from the mentioned method in the sense that the present invention does not use gradient values since they are very sensitive to image noise. Instead, the present invention uses pixel standard deviation as it is much more robust to image noise.

The United States patent document US 6711293**,** an application in the state of the art, discloses a method to detect salient features on images, in which difference of Gaussians are used to construct a scale-space.

The present invention resembles the mentioned method in the sense that it performs a target analysis using a scale-space constructed from the image. However the present invention generates a scale-space using standard pixel deviations, while the mentioned method generates the scale-space using difference of Gaussians. In addition, the output of the mentioned method is a list of salient points on the image, whereas the output of the present invention is the size of the target at a given pixel position.

### Summary of the Invention

An objective of the present invention is to provide a methodology to estimate the size of a target on an image received from a sensor, given the pixel position of the target.

An objective of the present invention is to provide a simple and efficient methodology to estimate the size of a rectangle that encapsulates the whole target with minimum possible number of background pixels using scale space of pixel standard deviations.

An objective of the present invention is to provide a methodology to estimate the target size independent of the resolution of the imaging system which is used to capture the target.

### Detailed Description of the Invention

A system and method realized to fulfil the objective of the present invention is illustrated in the accompanying figures, in which:

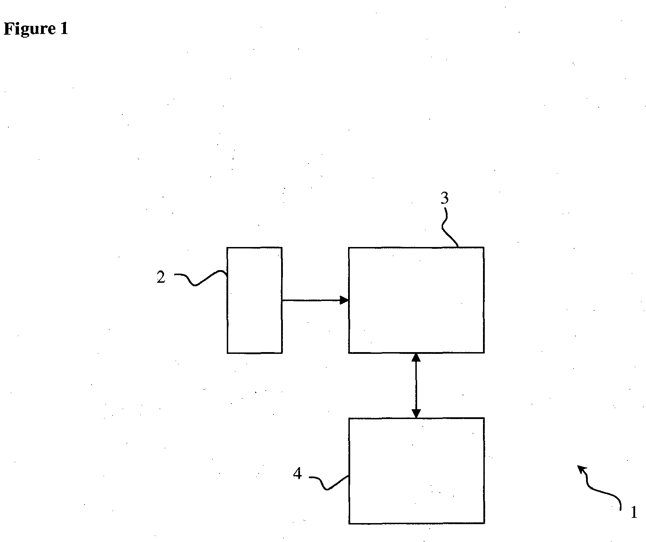

**Figure 1** is the schematic view of the preferred embodiment system.
**Figure 2** is the flowchart of the preferred method of the present invention.

The components illustrated in the figures are individually numbered, where the numbers refer to the following:
1. System for estimating target size
2. Image sensor
3. Image processing unit
4. User interface device

A method for estimating target size (100) fundamentally comprises the following steps,
a) receiving a pixel image including at least one target object and at least a coordinate of a pixel on a target (101),
b) calculating pixel standard deviations for pixels lying within a rectangular window centred around the received pixel on the target, successively enlarging the window in at least one direction by its step-size, starting from an initial window size and obtaining at least one window size versus standard deviation graph, up to the limit window size (102),
c) checking the graph for monotonically decreasing, if answer is no, then going to step d, else going to step e (103),
d) recording the window size at the point where the standard deviation first starts to decrease with increasing window size (104) and then going to step g,
e) checking the previously recorded window size for existing, if answer is no, then going to step g, else going to step f (105),
f) estimating the window size that encapsulates the whole target with minimum possible number of background pixels as the window size last recorded (106),
g) checking the maximum iteration limit for exceeding, if answer is no, then going to step i, else going to step h (107),
h) checking the previously recorded window size for existing, if answer is no, then going to step j, else going to step f (105a),
i) increasing the step-size and the initial window size, which is used to generate standard deviation graph by predetermined amounts (108) and then going to step b,
j) estimating the window size as the predetermined minimum window size (109).

First, a grey level image of the scene under consideration is received together with the coordinates of a pixel on the target on this image (101). Assuming that there is high contrast between the target and its background and low contrast among them independently; within an imaginary window that properly encloses the target, the calculated pixel standard deviation calculated for the pixels in the window should be close to a maximum value. In theory, for the pixel standard deviation values calculated for different sized windows around the given pixel, the target size is equal to the window size that gives the maximum pixel standard deviation. Therefore the size of the imaginary window around the target, for which the pixel standard deviation is maximum, can be assumed as a good estimate for the window size that encapsulates the whole target with minimum possible number of background pixels, i.e. the target size.

In the step following step a (101), pixel standard deviations around the given pixel on the target are found within growing rectangular windows using different window sizes. During this step b, window size is increased in at least one direction, this direction(s) being the same direction(s) for successive enlargements. The enlargement in one direction is done by the related step-size, starting from a predetermined size. At the end, a window size versus standard deviation graph, for every desired window size having a height and width is obtained (102).

For example, to estimate the size of a square or a circular target, a square window can be enlarged in both directions by the same step size. For an irregular shape (say an ellipse), the enlargement can be done in separate directions independently. Therefore, it is possible to find the change of standard deviation for different directions, thus the size of a non-symmetric shape can also be calculated. The rectangular window can be arbitrarily rotated about the target pixel coordinate, but this rotation should remain the same throughout a set of standard deviation calculations in order to obtain the standard deviation versus window size graph. Nevertheless, at the end of step b (102), if the image noise is not excessive and the target does not posses detailed texture (as it usually does not for infrared images), a standard deviation versus window size graph similar to one in Graph 1 is obtained with a maximum value.

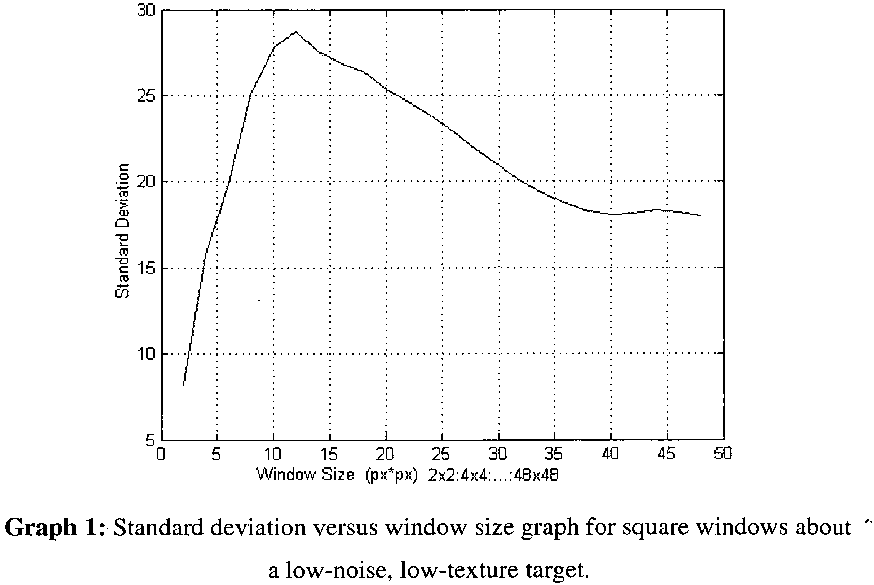

The factors, which could prevent the method from working properly in an infrared image, could be excessive image noise, detailed target texture and abrupt changes of temperatures on the target. These conditions violate the assumption that there is high contrast between the target and background and low contrast among them independently. In this way, the problem remains unresolved since more than one maximum standard deviation value may exist in the final graph under these circumstances. However, the method aims at investigating the most general and significant distinction between the target and background. If the representative window could be analyzed on different scales, it would be possible to find a more general and better discrimination for the target. The window size limits are predetermined with a plausible assumption.

Step c) "Checking the graph for monotonically decreasing, if answer is no, then going to step d, else going to step e (103) check is applied to the graph to determine whether the graph has a maximum or not. If the answer is "*no*" then there should be a maximum value. If a maximum value exists in the graph, the window at the point where the standard deviation first starts to decrease (the nearest data point to the right of the maximum value on the graph) is recorded in step d (104). Nearest data point to the right equivalently means the data point related to the next (larger) window size. If the graph is monotonically decreasing (i.e. answer is "*yes*"), then a check for a previously recorded window size ("checking the previously recorded window size for existing, if answer is no, then going to step g, else going to step f") is carried out in step e (105). If there is a previously recorded window size, the window size that encapsulates the whole target with minimum possible number of background pixels is estimated as the last recorded window size in step f (106).

As mentioned above, a maximum value (actually the point where the standard deviation first starts to decrease) prior to a monotonically decreasing graph is searched and recorded. During the search, the step-size (used to enlarge the window size for every standard deviation calculation) is increased at every iteration (108). In other words, to obtain different standard deviation versus window size graphs, the window size is enlarged with increasing levels of step-sizes. For example, if the windows sizes are 3x3; 5x5; 7x7 etc. for the first graph (step-size = 2), they are 3x3; 7x7; 11x11 (step-size = 4) for the second run. This is similar to down-sampling the image for every iteration and provides a way to use a scale-space of pixel standard deviations. This way, a more general view is obtained with successive iterations. When a monotonically decreasing graph is found, the previous window size with the maximum standard deviation will be a good estimate for the target size. In another application of the method (100), the initial window size, which is used to generate the standard deviation graph, is also increased proportional to the step-size in step i 108) in order to make it compatible with the higher scale levels.

After the steps d (104) and e (105), (if there is no previously recorded window size in step e (105)), "checking the maximum iteration limit for exceeding, if answer is no, then going to step i, else going to step h" check is carried out in step g (107). Obviously, this check allows the method to iterate until a limit is reached. This prevents the method from iterating infinitely or too many times before a monotonically decreasing graph is found.

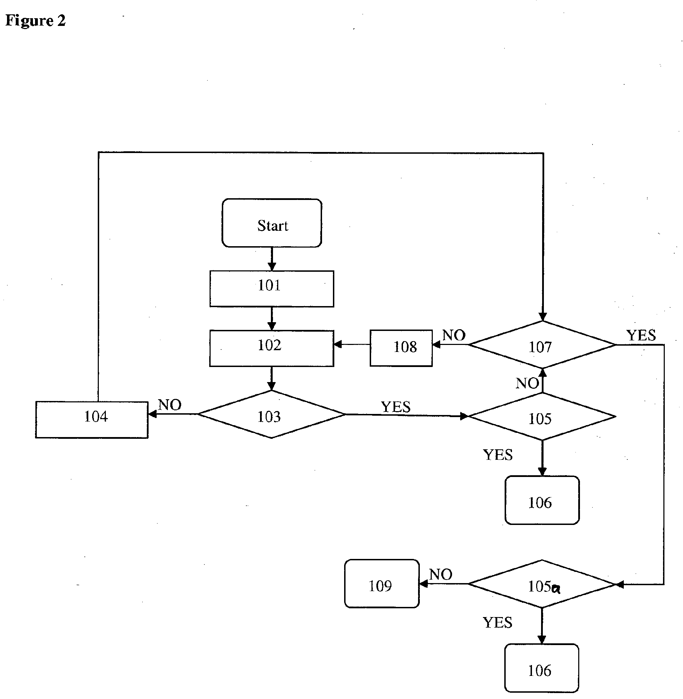

If a monotonically decreasing graph is not found before the limit is exceeded, there are two possibilities. If there is recorded window size (i.e. there has been a graph with a maximum, in a previous iteration), then in a further (106) step f the target size is estimated as this recorded value. Or if there is no recorded window size (i.e. there hasn't been any graph with a maximum in a previous iteration) the target size is estimated as the predetermined minimum window size (109). (Figure 2)

If the first graph is monotonically decreasing (since it is generally not possible to have a maximum in the graphs of higher scale levels) the method (100) may iterate until the limit is reached. In such a case, the target size can be estimated as the predetermined minimum window size (109). In another application of the method (100), an additional step to check whether graph is monotonically decreasing at the first iteration, can be included in order to directly estimate target size as the predetermined minimum window size (109).

The reason why a monotonically decreasing graph is expected at higher scale levels, is related to the window size. If the updated window size at step (108) is large enough that it both encapsulates considerable amount of background pixels and the target; as the window size is increased further, the standard deviation decreases due to the fact that more and more background pixels will be involved in the calculation. Therefore, the exact scale (the iteration number of the graph) that gives target window size is the graph, which is succeeded by a monotonically decreasing one. Such a search algorithm prevents the method from being misled by lower scale levels (iterations with small step-sizes).

A system for estimating target size (1) fundamentally comprises;
- at least one image sensor (2) to acquire at least one electronic pixel image of the scene under consideration, when necessary,
- at least one user interface device (4) configured to receive at least one coordinate of a point on the target from the user when necessary,
- at least one image processing unit (3) configured to receive at least one image, receive at least one coordinate of a pixel on a target when available; to implement the method for estimating target size (100) using these data; and to print at least one rectangle, whose size was decided by the method (100), around the target pixel, to the user interface device (4).

In a preferred embodiment of the present invention, image sensor (2) is a sensor configured to acquire an image with a high contrast between a possible target and its background. Preferentially image sensor (2) is an infrared vision camera which is able to differentiate temperature differences in the scene.

In a preferred embodiment of the present invention, user interface device (4) consists of a pointing device such as a mouse, joystick or similar equipment and a device able to display a two dimensional pixel image. User interface device (4) is able to receive at least one coordinate from the user for every pixel image. The user will point the target and its position will be available to be used in the method (100) implemented on the image processing unit (3). The user can also re-target anytime to correct any mistakes in the size estimation.

In a preferred embodiment of the present invention, image processing unit (3) is configured to receive at least one image from image sensor (2) and receive at least one coordinate of a pixel on a target when available from user interface device (4). In another preferred embodiment, at least one coordinate of the target is received continuously (or automatically in predetermined intervals) from an automatic target searching and tracking device and image is received from a recorded or live image sequence (video stream). Anyone proficient in the image processing field should understand that this system (1) and method (100) can be applied on a sequence of pixel images and the target size can be continuously monitored. Since position of a pixel on the target is known, it is possible for user interface device (4) to print at least one rectangle, whose size was decided by the method (100) around the target onto the display.

The method (100) can effectively estimate the size of a target on a pixel image and display a "bounding box" around the target, given a position of a pixel on the target. A simple and efficient methodology used to estimate the size of a rectangle, which encapsulates the whole target with minimum possible number of background pixels using scale space of pixel standard deviations, is obtained. Moreover, the target size is estimated invariant of the visualization system's image resolution. The pixel resolution indicates how many pixels correspond to one meters of an object at a constant distance from the camera. When the imaging resolution of the visualization system changes, this value also changes. For instance, a method, which searches for a proper standard deviation value in a window increased by one pixel at each iteration, will function different in a system with different resolution. However in our case, if the pixel resolution of the visual system is changed, the graph with a peak succeeded by a monotonically decreasing graph will show up in a different iteration and giving a different rectangular target size (in pixels); however it will still encapsulate the whole target with minimum number of background pixels.

Within the scope of these basic concepts, it is possible to develop a wide variety of embodiments of the inventive system and method for estimating target size (1), (100). The invention cannot be limited to the examples described herein; it is essentially according to the claims.

## Claims

1. A method for estimating target size using scale space of pixel standard deviations (100) comprising the following steps:
a) receiving a pixel image including at least one target object and at least a coordinate of a pixel on a target (101),
b) calculating pixel standard deviations for pixels lying within a rectangular window centred around the received pixel on the target, successively enlarging the window in at least one direction by its step-size, starting from an initial window size and obtaining at least one window size versus standard deviation graph, up to the limit window size (102), the method being **characterized by** the following steps:
c) checking the graph for monotonically decreasing, if answer is no, then going to step d, else going to step e (103),
d) recording the window size at the point where the standard deviation first starts to decrease with increasing window size (104) and then going to step g,
e) checking the previously recorded window size for existing, if answer is no, then going to step g, else going to step f (105),
f) estimating the window size that encapsulates the whole target with minimum possible number of background pixels as the window size last recorded (106),
g checking the maximum iteration limit for exceeding, if answer is no, then going to step i, else going to step h (107),
h) checking the previously recorded window size for existing, if answer is no, then going to step j, else going to step f (105a),
i) increasing the step-size and the initial window size, which is used to generate standard deviation graph by predetermined amounts (108) and then going to step b,
j) estimating the window size as the predetermined minimum window size (109).

2. A method for estimating target size using scale-space of pixel standard deviations (100) according to Claim 1, wherein the initial window size used to form the standard deviation graph is increased in step (108), by a predetermined amount, which is proportional to the step-size.

3. A method for estimating target size using scale-space of pixel standard deviations (100) according to Claim 1 or 2, wherein if the graph is monotonically decreasing at the first check in step c **(103)**, it is followed directly by estimating the window size as the predetermined minimum window size (109).

4. A method for estimating target size using scale-space of pixel standard deviations (100) according to Claims 1 to 3, wherein the nearest data point to the right of the maximum value on the obtained graph is recorded in step (104).

5. A system for estimating target size using scale space of pixel standard deviations (1) **comprising;**
- at least one image sensor (2) to acquire at least one electronic pixel image of the scene under consideration when necessary,
- at least one user interface device (4) configured to receive at least one coordinate of a point on the target from the user when necessary
- at least one image processing unit (3) configured to receive at least one image; to receive at least one coordinate of a pixel on a target when available; to implement the method for estimating target size (100) using these data and print at least one rectangle, whose size was decided by the method (100) as claimed in one of the preceding claims, around the target pixel to user interface device (4).

6. A system for estimating target size using scale-space of pixel standard deviations (1) as in Claim 5, wherein an image sensor (2) which is configured to acquire an image with a high contrast between a possible target and its background.

7. A system for estimating target size using scale-space of pixel standard deviations (1) as in Claim 5 or 6, wherein an image sensor (2) which is an infrared vision camera capable of differentiating temperature differences in the scene.

8. A system for estimating target size using scale-space of pixel standard deviations (1) as in Claims 5 to 7, wherein a user interface device (4) which consists of a pointing device such as a mouse, joystick or similar equipment.

9. A system for estimating target size using scale-space of pixel standard deviations (1) as in Claims 5 to 8, wherein a user interface device (4) which consists of a device capable of displaying a two dimensional pixel image.

10. A system for estimating target size using scale-space of pixel standard deviations (1) as in Claims 5 to 9, wherein an image processing unit (3) which is configured to receive at least one image from image sensor (2).

11. A system for estimating target size using scale space of pixel standard deviations (1) as in Claims 5 to 10, wherein an image processing unit (3) which is configured to receive at least one coordinate of a pixel on a target when available from user interface device (4).

12. A system for estimating target size using scale-space of pixel standard deviations (1) as in Claims 5 to 11, wherein an image processing unit (3) which is configured to receive at least one coordinate of the target from an automatic target searching and tracking device continuously or in predetermined intervals.

13. A system for estimating target size using scale-space of pixel standard deviations (1) as in Claims 5 to 12, wherein an image processing unit (3) which is configured to receive an image from a recorded or live image sequence (video stream).

## Patentansprüche

1. Ein Verfahren zur Schätzung der Zielgröße unter Verwendung der Skala von Pixel-Standartabweichung (100) umfassend folgende Schritte;
a) Empfangen eines Pixelbildes einschließlich zumindest eines Zielobjektes und zumindest einer Koordinaten eines Bildpunktes in einem Ziel (101),
b) Rechnen von Standartabweichungen für Bildpunkte, die innerhalb eines rechtwinkligen, um die empfangenen Bildpunkte im Ziel zentrierten Fensters liegen, nachfolgend Verbreitern des Fensters mindestens in einer Richtung durch seine Schrittweite beginnend von dem anfänglichen Fenstergröße und erhaltend mindestens eine Fenstergröße im Vergleich zur Standartabweichungs-Graphik bis zur Grenz-Fenstergröße (102),
das Verfahren ist **gekennzeichnet durch** folgenden Schritte:
c) Kontrollieren der Grafik für monoton fallenden Zustand, wenn die Antwort nein ist, dann zum Schritt d übergehen, sonst zum Schritt e übergehen (103),
d) Erfassung der Fenstergröße an dem Punkt, wo die Standartabweichung erst anfängt mit der Fenstergröße zu fallen (104) und dann zum Schritt g übergehen,
e) Überprüfung der vorher aufgezeichneten Fenstergröße ob sie noch besteht, wenn nein, dann zum Schritt g übergehen, sonst zum Schritt f übergehen (105),
f) Schätzen der Fenstergröße, die das gesamte Ziel mit minimal möglicher Anzahl von Hintergrundbildpunkte als zuletzt aufgezeichnete Fenstergröße umfaßt (106),
g) Überprüfung der maximalen Iteration-Größe hinsichtlich der Überschreitung, wenn nein, dann zum Schritt i übergehen, sonst zum Schritt h übergehen (107),
e) Überprüfung der vorher erfassten Fenstergröße ob sie besteht, wenn nein, dann zum Schritt j übergehen, sonst zum Schritt f übergehen (105a),
i) Erhöhen der Schrittweite und der anfänglichen Fenstergröße, welche eingesetzt wird, um die Standartabweichungs-Graphik mit den vorbestimmten Umfängen zu erzeugen (108) und dann zum Schritt b übergehen
j) Schätzen der Fenstergröße als die vorbestimmte minimale Fenstergröße (109).

2. Ein Verfahren zur Schätzung der Zielgröße unter Verwendung von Skalenraum (scale-space) der Pixel-Standartabweichungen (100) gemäß Anspruch 1, wobei die Fenstergröße, die eingesetzt wird um die Standartabweichungsgraphik zu bilden, beim Schritt (108) in einer vorbestimmten Menge erhöht wird, welche zur Schrittweite proportional ist.

3. Ein Verfahren zur Schätzung der Zielgröße unter Verwendung von Skalenraum der Pixel-Standartabweichungen (100) gemäß Anspruch 1 oder 2, wobei es unmittelbar folgt, dass die Fenstergröße als vorbestimmte minimale Fenstergröße geschätzt wird, wenn die Graphik bei der ersten Überprüfung im Schritt c monoton abnimmt (109).

4. Ein Verfahren zur Schätzung der Zielgröße unter Verwendung von Skalenraum der Pixel-Standartabweichungen (100) gemäß Anspruch 1 bis 3, wobei der nächste Datenpunkt rechts von der maximalen Wert auf der erhaltenen Graphik beim Schritt (104) aufgezeichnet ist.

5. Ein Verfahren zur Schätzung der Zielgröße unter Verwendung von Skalenraum der Pixel-Standartabweichungen (1) **umfassend:**
- zumindest einen Bildsensor (2) für Erhalten mindestens eines elektronischen Pixelbildes der Beobachtungsszene, wenn es nötig ist,
- mindestens eine Benutzerschnittstellenvorrichtung (4), die konfiguriert ist zumindest eine Koordinate eines Punktes im Ziel von dem Benutzer zu erhalten, wenn es nötig ist,
- mindestens eine Bildverarbeitungseinheit (3), die konfiguriert ist, um zumindest ein Bild zu empfangen, zumindest eine Koordinate eines Pixels (eines Bildpunktes) im Ziel zu erhalten, wenn vorhanden; um das Verfahren zur Schätzung der Zielgröße (100) unter Verwendung diese Daten durchzuführen und zumindest ein Rechteck um das Zielbildpunkt herum zur Benutzerschnittstellenvorrichtung (4) aufzudrucken, dessen Größe durch das Verfahren (100) wie in einem der vorangehenden Ansprüche bestimmt wurde.

6. Ein Verfahren zur Schätzung der Zielgröße unter Verwendung von Skalenraum der Pixel-Standartabweichungen (1) nach Anspruch 5, wobei ein Bildsensor (2) konfiguriert ist ein Bild mit einem hohen Kontrast zwischen einem eventuellen Ziel und seinem Hintergrund zu empfangen.

7. Ein Verfahren zur Schätzung der Zielgröße unter Verwendung von Skalenraum der Pixel-Standartabweichungen (1) nach Anspruch 5 oder 6, wobei der Bildsensor (2) eine Infrarot-Sichtkamera ist, die imstande ist, die Temperaturunterschiede in der Szene zu differenzieren.

8. Ein Verfahren zur Schätzung der Zielgröße unter Verwendung von Skalenraum der Pixel-Standartabweichungen (1) nach Ansprüchen 5 bis 7, wobei die Benutzerschnittstellenvorrichtung (4) aus einem Zeigegerät wie eine Maus, Joystick oder ähnlicher Ausrüstung besteht.

9. Ein Verfahren zur Schätzung der Zielgröße unter Verwendung von Skalenraum der Pixel-Standartabweichungen (1) nach Ansprüchen 5 bis 8, wobei die Benutzerschnittstellenvorrichtung (4) aus einer Vorrichtung besteht, die imstande ist ein zweidimensionales Pixelbild anzuzeigen.

10. Ein Verfahren zur Schätzung der Zielgröße unter Verwendung von Skalenraum der Pixel-Standartabweichungen (1) nach Ansprüchen 5 bis 9, wobei die Bildverarbeitungseinheit (3) konfiguriert ist, mindestens ein Bild von dem Bildsensor (2) zu empfangen.

11. Ein Verfahren zur Schätzung der Zielgröße unter Verwendung von Skalenraum der Pixel-Standartabweichungen (1) nach Ansprüchen 5 bis 10, wobei die Bildverarbeitungseinheit (3) konfiguriert ist, mindestens eine Koordinate eines Pixels im Ziel, wenn vorhanden, aus der Benutzerschnittstellenvorrichtung (4) zu erhalten.

12. Ein Verfahren zur Schätzung der Zielgröße unter Verwendung von Skalenraum der Pixel-Standartabweichungen (1) nach Ansprüchen 5 bis 11, wobei die Bildverarbeitungseinheit (3) konfiguriert ist, mindestens eine Koordinate eines Pixels im Ziel aus einem automatischen Zielsuche-und Verfolgungsgerät kontinuierlich oder in vorbestimmten Intervallen zu erhalten.

13. Ein Verfahren zur Schätzung der Zielgröße unter Verwendung von Skalenraum der Pixel-Standartabweichungen (1) nach Ansprüchen 5 bis 12, wobei die Bildverarbeitungseinheit (3) konfiguriert ist, ein Bild von einer aufgezeichneten oder Live-Bildfolge (Videostream) zu empfangen.

## Revendications

1. Procédé pour estimer la taille de cible en utilisant échelle d'écarts-types de pixels (100) comprenant les étapes suivantes:
a) recevoir une image de pixel comprenant au moins un objet de cible et au moins une coordonnées d'une pixel sur une cible (101),
b) calculer les écarts-types de pixel pour les pixels situés à l'intérieur d'une fenêtre rectangulaire centrée autour de pixel reçu sur la cible, successivement élargant la fenêtre dans au moins un sens par sa taille de pas, commençant d'une taille initiale de la fenêtre et obtenant au moins un graphique de la taille de fenêtre versus l' écart-type, jusqu'à la limite de la taille de fenêtre (102),
Procédé **caractérisé par** les étapes suivantes:
c) vérifier le graphique pour monotonement diminuer, si la réponse est non, puis passer à l'étape d, sinon passer à l'étape e (103),
d) enregistrer la taille de la fenêtre au point où l'écart-type commence premièrement à diminuer avec l'augmentation de la taille de la fenêtre (104), puis passer à l'étape g
e) vérifier la taille de la fenêtre précédemment enregistrée pour exister, si la réponse est non, alors passer à l'étape g, sinon passer à l'étape f (105),
f) estimer la taille de la fenêtre qui encapsule l'ensemble cible avec le nombre minimum de pixels de fond possible que la taille de la fenêtre dernièrement enregistrée (106),
g) vérifier la limite d'itération maximal de dépassement, si la réponse est non, alors passer à l'étape i, sinon passer à l'étape h (107),
h) vérifier la taille de la fenêtre précédemment enregistrée pour exister, si la réponse est non, alors passer à l'étape j, sinon passer à l'étape f (105a),
i) augmenter la taille de pas et la taille initiale de la fenêtre, qui est utilisé pour générer Ecart-type graphique par quantités prédéterminées (108) et puis aller à l'étape b
j) estimer la taille de la fenêtre en tant que la taille de fenêtre minimale prédéterminée (109).

2. Procédé pour estimer la taille de cible en utilisant l'espace d'échelle de l' écart-type de pixels (100) selon la revendication 1, dans lequel la taille de la fenêtre utilisée pour former l'Ecart-type graphique est augmentée à l'étape (108), par une quantité prédéterminée, qui est proportionnelle à la taille de pas.

3. Procédé pour estimer la taille de cible en utilisant l'espace d'échelle de l' écart-type de pixels (100) selon la revendication 1 ou 2, dans lequel si le graphique monotonement diminue lors de la première vérification de l'étape c (103), elle est suivie directement par l'estimation de la taille de la fenêtre en tant que la taille de fenêtre minimale prédéterminée (109).

4. Procédé pour estimer la taille de cible en utilisant l'échelle d'espace de pixel écarts-types (100) selon la revendication 1 à 3, dans lequel point de données le plus proche à droite de la valeur maximale sur le graphe obtenu est enregistré dans l'étape (104).

5. Un système d'estimation de taille de cible en utilisant l'échelle de l'espace des écarts types de pixels (1) **comprenant:**
- au moins un capteur d'image (2) pour acquérir au moins une image électronique de pixel de la scène en cours d'examen, si nécessaire,
- au moins un dispositif d'interface utilisateur (4) configurée pour recevoir au moins une coordonnée d'un point sur la cible de l'utilisateur si nécessaire,
- au moins une unité de traitement d'images (3) configuré pour recevoir au moins une image; pour recevoir au moins une coordonnée d'un pixel sur une cible quand disponible; pour mettre en oeuvre le procédé d'estimation de taille de la cible (100) en utilisant ces données et imprimer au moins un rectangle, dont la taille a été décidé par le procédé (100) selon l'une des revendications précédentes, autour du pixel cible de dispositif d'interface d'utilisateur (4).

6. Un système pour estimer la taille de cible en utilisant l'échelle d'espace de pixel écarts-types (1) selon la revendication 5, dans lequel un capteur d'image (2) est configuré pour acquérir une image avec un contraste élevé entre une cible possible et son arrière-plan.

7. Un système pour estimer la taille de cible en utilisant l'échelle d'espace de pixel écarts-types (1) selon la revendication 5 ou 6, dans lequel un capteur d'image (2) est une caméra de vision infrarouge capables de se différencier des différences de température dans la scène.

8. Un système pour estimer la taille de cible en utilisant l'échelle d'espace de pixel écarts-types (1) selon les revendications 5 à 7, dans lequel un dispositif d'interface utilisateur (4) est constitué d'un dispositif de pointage tel qu'une souris, un joystick ou un équipement similaire.

9. Un système pour estimer la taille de cible en utilisant l'échelle d'espace de pixel écarts-types (1) selon les revendications 5 à 8, dans lequel un dispositif d'interface utilisateur (4) se compose d'un dispositif capable d'afficher une image à deux dimensions de pixels.

10. Un système pour estimer la taille de cible en utilisant l'échelle d'espace de pixel écarts-types (1) selon les revendications 5 à 9, dans lequel une unité de traitement d'image (3) est configurée pour recevoir au moins une image de capteur d'image (2).

11. Un système pour estimer la taille de cible en utilisant l'espace de l'échelle de pixel écarts-types (1) selon les revendications 5 à 10, dans lequel une unité de traitement d'image (3) est configurée pour recevoir au moins une coordonnée d'un pixel sur une cible lorsqu'il est disponible à partir de l'utilisateur dispositif d'interface (4).

12. Un système pour estimer la taille de cible en utilisant l'espace de l'échelle de pixel écarts-types (1) selon les revendications 5 à 11, dans lequel une unité de traitement d'image (3) est configurée pour recevoir au moins une des coordonnées de la cible à partir d'un dispositif automatique de recherché et suivi de cible de manière continue ou à des intervalles prédéterminés.

13. Un système pour estimer la taille de cible en utilisant l'espace de l'échelle de pixels écarts-types (1) selon les revendications 5 à 12, dans lequel une unité de traitement d'image (3) est configurée pour recevoir une image d'une séquence d'images enregistrées ou en direct (flux vidéo).
